Europäisches Patentamt

European Patent Office

Office européen des brevets

(19)

(11) Veröffentlichungsnummer: **0 045 506**

**A1**

(12) # EUROPÄISCHE PATENTANMELDUNG

(21) Anmeldenummer: **81106065.6**

(22) Anmeldetag: **03.08.81**

(51) Int. Cl.³: **F 24 D 3/00**

(30) Priorität: 04.08.80 DE 3029527
14.10.80 DE 3038680
30.01.81 DE 3103173
30.03.81 DE 3112530
15.04.81 DE 3115132

(43) Veröffentlichungstag der Anmeldung:
10.02.82 Patentblatt 82/6

(84) Benannte Vertragsstaaten:
AT BE CH FR GB IT LI NL SE

(71) Anmelder: **Pfeifer, Johann B.**
**Römerstrasse 60**
**D-6530 Bingen-Sponsheim(DE)**

(72) Erfinder: **Pfeifer, Johann B.**
**Römerstrasse 60**
**D-6530 Bingen-Sponsheim(DE)**

(74) Vertreter: **Patentanwälte Henkel-Kern-Feiler-Hänzel**
**Möhlstrasse 37**
**D-8000 München 80(DE)**

(54) **Wärmepumpenanlage zur Aufnahme von Wärme aus der Umgebungsatmosphäre.**

(57) Wärmepumpenanlage zur Aufnahme von Wärme aus der Umgebungsatmosphäre mit einem der Umgebungstemperatur ausgesetzten Kältemittelkreislaufbereich (22) sowie einem diesem nachgeschalteten mit einer Regeleinrichtung arbeitenden Verdichter (8) und einem Entspannungsventil (9), zwischen denen ein wärmeabgebender Bereich (25) des Kältemittelkreislaufs eingeschaltet ist. Der wärmeabgebende Bereich (25) des Kältemittelkreislaufs ist dabei als direkt vom Kältemittelkreislauf der Wärmepumpe durchströmten und unmittelbar an die zu erwärmende Innenraumatmosphäre wärmeabgebender Heizbereich ausgebildet. Der wärmeaufnehmende Bereich (22) kann in einem Wandelement, z.B. einer Gebäudewandung, integriert sein. Er kann auch als Fensterkollektor (56,57,58,60) oder Luftkollektor in Form einer Fassadenverkleidung (81) ausgebildet sein. Die derart ausgebildete Wärmepumpenanlage zeichnet sich durch einfachen Aufbau und minimale Wärmeverluste und damit hohen Wirkungsgrad aus. Insbesondere ist eine nachträglich Montage leicht möglich.

Fig.1

- 1 -

---

Wärmepumpenanlage zur Aufnahme von Wärme aus der
Umgebungsatmosphäre

---

Die Erfindung betrifft eine Wärmepumpenanlage zur Aufnahme
von Wärme aus der Umgebungsatmosphäre mit einem der Umgebungstemperatur ausgesetzten Kältemittelkreislaufbereich, mit z.B.
Freon oder Frigen als Kältemittel, sowie einem diesem
nachgeschalteten mit einer Regeleinrichtung arbeitenden Verdichter und einem Verdampfer, zwischen denen ein wärmeabgebender Bereich des Kältemittelkreislaufs eingeschaltet ist.
Dabei werden unter Wärmepumpenanlage nachstehend sämtliche
zur Gesamtfunktion benötigten Bestandteile gerechnet, die zur Wärmeaufnahme, zur Verdichtung und Verdampfung des Kältemittels
sowie zur geregelten Wärmeabgabe notwendig sind.

Bekannte Wärmepumpenanlagen dieser mit einem Verdampfungskältemittel, wie z.B. Freon bzw. Frigen oder dergl. arbeitenden
Art, weisen mindestens im wärmeabgebenden Bereich des Primär-Kältemittelkreislaufs der Wärmepumpe einen zusätzlichen zweiten Kreislauf auf. Auf diesen zweiten Kreislauf, welcher statt mit dem gesundheitsgefährdenden Freon bzw. Frigen mit einem üblichen Warmwasserkreislauf arbeitet, wird die Wärme aus dem primären Wärmepumpenkreislauf zunächst auf einen Sekundärkreislauf übertragen, ehe sie über diesen zweiten Kreislauf den eigentlichen Heizkörpern zugeführt wird.

Aufgabe der Erfindung ist die Schaffung einer Wärmepumpenanlage, bei dem die einzelnen Heizkörper unmittelbar in den primären Wärmepumpenkreislauf eingeschaltet sind und bei dem Maßnahmen getroffen sind, sowohl in dem der Umgebung ausgesetzten als auch in dem in der Raum-Innenatmosphäre liegenden Kältemittelkreislaufbereich jegliche ökologische Gefährdung durch das Verdampfungskältemittel (Freon bzw. Frigen etc.) auszuschalten. Gleichzeitig soll damit erfindungsgemäß eine konstruktive Vereinfachung und ein wesentlich erhöhter Wirkungsgrad der Wärmepumpenanlage sowie eine verbesserte Regelmöglichkeit bei zusätzlich erweiterten Anwendungsbereichen erreicht werden.

Demgemäß besteht die Erfindung zunächst einmal darin, daß der wärmeabgebende Bereich des Kältemittelkreislaufes als direkt vom Kältemittel der Wärmepumpe durchströmtes und unmittelbar an die zu erwärmende Innenraumatmosphäre wärmeabgebender Heizbereich ausgebildet ist.

Diese erfindungsgemäße Wärmepumpenanlage gewährleistet nicht nur eine konstruktive Vereinfachung bei erhöhtem Wirkungsgrad und eine verbesserte Regelmöglichkeit, sondern erlaubt auch eine zusätzlich erweiterte Einsatzmöglichkeit in besonders kompakter Form (auch als kompaktes und vorgefertigt herstellbares Montageelement), wenn sie derart aufgebaut ist, daß sie aus einer mit einer Seite der Umgebungsatmosphäre zugewandten Wärmeaufnahmefläche mit an deren anderer Seite befestigten Verdampferrohren sowie einer mit einer Seite dem zu beheizenden Innenraum zugewandten Wärmeabgabefläche besteht, an deren anderer Seite der wärmeabgebende Heizbereich in Form von daran befestigten Heizrohren vorgesehen ist, wobei zwischen Wärmeaufnahme- und Wärmeabgabefläche ein wärmeübergangsisolierter Abstand angeordnet ist.

Dabei kann die Wärmeabgabefläche aus zwei Schichten bestehen, zwischen denen Hohlräume zur Durchleitung des Kältemittels vorgesehen sind.

In dieser Form kann sie als kompaktes und selbsttragendes, in sich fest zusammengefügtes Einbau- bzw. Wandelement mit vorgegebenen Flächen und/oder Raummaßen ausgeführt sein, wobei der wärmeübergangsisolierte Abstand mit einem vorzugsweise flächen- bzw. raumstabilen Wärmeisolationsmaterial, z.B. Styropor oder Polyurethan, ausgefüllt ist.

Dabei kann insbesondere der Verdichter innerhalb des wärmeübergangsisolierten Abstands zwischen der Wärmeaufnahme- und der Wärmeabgabefläche angeordnet und das Einbau- bzw. Wandelement allein über einen elektrischen Anschluß für den eingebauten Verdichter angeschlossen sein.

Durch die einander gegenüberliegende Anordnung von wärmeaufnehmenden und wärmeabgebenden Flächen sowie auch die Einfügung des wärmeentwickelnden Verdichters erfolgt in erheblichem Maße eine Rückgewinnung der sonst beim Stand der Technik üblichen Wärmeverluste.

In dieser Form läßt sich die erfindungsgemäße Wärmepumpenanlage z.B. auch in Container, Wohnwagen, Güterwagen und vor allem als Wandelement einbauen.

Um insbesondere bei regelungsbedingten Stillständen des Verdichters einen Druckausgleich von Kondensator zum Verdichter und dadurch bedingten Wärmeverlust zu verhindern, wird erfindungsgemäß ferner jeweils vor und hinter dem Verdichter ein in Fließrichtung öffnendes Rückschlagventil in den Kältemittelkreislauf sowie in Fließrichtung vor dem Entspannungsventil ein signalgesteuertes Magnetventil eingeschaltet.

Um aber andererseits mit dem erwärmten Kältemittel eine Vereisung des Verdampfers auf der Gebäudeaußenseite zu beheben, kann parallel zum Entspannungsventil und zum Magnetventil eine Umgehungsleitung mit einem Magnetventil vorgesehen sein. Auch der Wirkungsgrad des Verdichters wird dadurch verbessert.

Um zu verhindern, daß im Falle einer Undichtigkeit im Kältemittelkreislauf Verdampfer-Kältemittel austritt, ist ferner erfindungsgemäß ein Leckverlust-Meßgerät vorgesehen, welches bei Überschreiten eines festeingestellten Leckverlust-Maximalwertes ein Sicherheitsventil öffnet und ein schnelles Abziehen des gesamten Kältemittels in ein Sicherheitsreservoir einleitet. Die erfindungsgemäße Wärmepumpenanlage läßt sich infolge ihrer Sicherheit auch bei Anwendung höheren Drucks einsetzen.

In einer weiteren verbesserten Ausführungsform ist in Fließrichtung nach dem Verdichter und vor dem diesem nachgeschalteten Rückschlagventil ein Sicherheits und Aufnahmereservoir an den Kältemittelkreislauf angeschaltet und ein Magnetventil sowie vor dem Rückschlagventil ein weiteres Magnetventil angeordnet. Diese sind auf ein Leckanzeige-Signal hin betätigbar, wobei das eine Magnetventil verschlossen und das vor dem Reservoir befindliche Magnetventil geöffnet wird. Auf diese Weise entzieht der Verdichter in kürzester Zeit das Kältemittel dem Kältemittel-Kreislaufbereich.

Wenn die Raumtemperatur-Regelventile jedes einzelnen Heizkörpers des Heizbereichs am Ausgang des Heizkörpers angebracht sind, ergibt sich zudem eine deutlich verbesserte Sicherheit und auch des Anfahrverhaltens des Verdichters, weil auf der Verdichtungsseite stets ein hohes komprimierbares Volumen vorhanden ist. Auch kann damit der Rohrdurchmesser des Rücklaufrohres kleiner gehalten werden.

Als weitere Sicherheitsmaßnahme auf der Innenraum-Kreislaufseite werden erfindungsgemäß Heizrohre der Heizkörper mit einem Sicherheitsmantel leckdicht umgeben. Dabei wird kein weiterer Kreislauf eingerichtet, sondern die Heizrohre lediglich ummantelt. Dies kann geschehen, indem der Sicherheitsmantel aus einem koaxial zum Heizroh· angeordneten Ummantelungsrohr besteht, wobei auch zwischen Heizrohr und Ummantelungsrohr ein Zwischenraum vorgesehen sein kann, welcher mit einem gut wärmeübertragenden Medium, z.B. Wasser, gefüllt ist. Es können auch mehrere Windungen der Heizrohre gemeinsam von einer Sicherheitsummantelung eingehüllt sein, welche mit einem gut wärmeübertragenden Medium gefüllt sind. Auch ist es möglich, die Heizrohre flüssigkeits- und gasdicht in einen gut wärmeleitenden Körper aus z.B. Keramik oder Beton als Sicherheitsmantel einzulagern. Der damit gebildete Heizkörper hat zudem den Vorteil erheblicher Wärmespeicherung und kann auch mit gut wärmeabstrahlender Oberfläche versehen sein. Als zusätzliche Sicherheitsmaßnahme kann ein auf einen Druckanstieg zwischen Heizrohr und Sicherheitsummantelung ansprechender Druckschalter, welcher als Leckanzeige ein Signal an die Kühlmittelkreis-Regelung abgibt, vorgesehen sein.

Durch die starke konstruktive Vereinfachung der Wärmepumpenanlage und vor allem auch die damit gewährleistete hohe Lecksicherheit sowie die sich ergebenden kleineren Rohrquerschnitte ist es möglich, auch kleinere Konstruktionsbereiche eines Hauses, wie z.B. Zäune, Dächer, Dachrinnen, Fenster, Fensterbank und Türen oder dergleichen in die Wärmeausnutzung einzubeziehen.

Unabhängig davon kann der Wärmetauscher für ein Fenster oder eine Tür oder dergleichen auch mit einer von einer zentralen Anlage unabhängigen kleinen Wärmepumpe ausgerüstet sein.

Eine solche Anlage zur Nutzung der Wärmeverluste von Fenstern oder Türen kann erfindungsgemäß gekennzeichnet sein durch eine in einem Fensterrahmen im Abstand von der Scheibe angeordnete äußere zweite Scheibe, eine am unteren Rand des Fensterrahmens angeordnete, von außen in den Zwischenraum zwischen den beiden Scheiben mündende Lufteintrittsöffnung, einen am oberen Rand des Fensterrahmens in einem die luftflußabseitige Seite des Zwischenraums zwischen den beiden Scheiben fortsetzenden Luftzufuhrkanal angeordneten Wärmetauscher, welcher der Zuluft Wärme entzieht und Wärmetauscherelemente in einem oberhalb des Luftzufuhrkanals angeordneten Abluftkanal besitzt, wobei der Wärmefluß beider Kanäle miteinander kombiniert auf den gleichen Wärmetauscher geschaltet ist.

Eine doppelte Nutzung der Wärmetauscherfläche ergibt sich, wenn der Abflußkanal und der Luftzufuhrkanal durch eine wärmeleitende Trennwand voneinander getrennt sind, welche zugleich als Wärmetauscherfläche vorgesehen ist. Damit wird zugleich eine Verbesserung der Ausnutzung der Abluftwärme und der Raumluftqualität erzielt.

Ferner kann der Abluftkanal wahlweise durch eine Überströmöffnung mit dem Luftzufuhrkanal oder mit der Raumluft verbunden werden und auch im Bereich oberhalb
des Luftzufuhrkanals ein Lüfter vorgesehen sein.

Auch der der Umgebungsatmosphäre ausgesetzte Kältemittelkreislaufbereich kann erfindungsgemäß hinsichtlich
einer Sicherheitsabdeckung zusätzlich geschützt werden,
und zwar in Kombination mit einer konstruktiv einfach
herzustellenden und zu montierenden Fassade, welche zugleich wiederum eine Verbesserung der Wärmeausnutzung
ermöglicht.

Nachstehend werden bevorzugte Ausführungsbeispiele der
Erfindung anhand der beigefügten Zeichnungen näher erläutert. Es zeigen;

Fig. 1 eine schematische Darstellung der erfindungsgemäßen Wärmepumpenanlage,

Fig. 2 einen ausschnittsweisen Querschnitt durch ein
erfindungsgemäßes Wandelement,

Fig. 3 eine schematische Darstellung eines Heizkörperelements,

Fig. 4 Querschnitt durch ein Heizrohr des Heizkörperelements gemäß Fig. 3,

Fig. 5 Teil eines Heizkörpers mit paarweise gekapselten Heizrohren in schematischer Perspektivdarstellung,

Fig. 6 einen Teil eines Heizkörpers mit mehreren gekapselten Heizrohren in einer in Fig. 5 entsprechenden Darstellung,

Fig. 7 erfindungsgemäß ausgebildete Fenster mit eigenem Wärmetauscherteil im schematischen Querschnitt, wobei dieses Fenster Teil der erfindungsmäßen Wärmepumpenanlage sein kann,

Fig. 7a einen Teilausschnitt aus Fig. 7 mit anderer Betriebsstellung,

Fig. 8 einen Teil einer Außenwand eines Hauses im Schnitt, an dessen Außenseite ein Luftkollektor angebracht ist,

Fig. 9 Ausschnitt IX in Figur 8 in vergrößertem Maßstab,

Fig. 10-12 eine bevorzugte Ausführungsform für die Befestigung von Fassadenverkleidungen an einem wärmeaufnehmenden Rohrsystem,

Fig.12a und 12b weiter abgewandelte Ausführungsformen von Befestigungsprofilen für Dachelemente,

Fig. 13 schematische Darstellung einer bevorzugten Ausführungsform eines Verdichters,

Fig. 14 eine zweite Ausführungsform für einen Verdichter,

Fig. 15 eine dritte Ausführungsform für einen Verdichter,

Fig. 16 eine abgewandelte Ausführungsform eines Luftkollektors,

Fig. 17 und 18 weiter abgewandelte Ausführungsformen eines
Luftkollektors, und

Fig. 19        eine schematische Wiedergabe der Montage eines ein Wärmetauschermedium führenden Rohres eines wärmeaufnehmenden Fassaden-
Rohrleitungssystems.

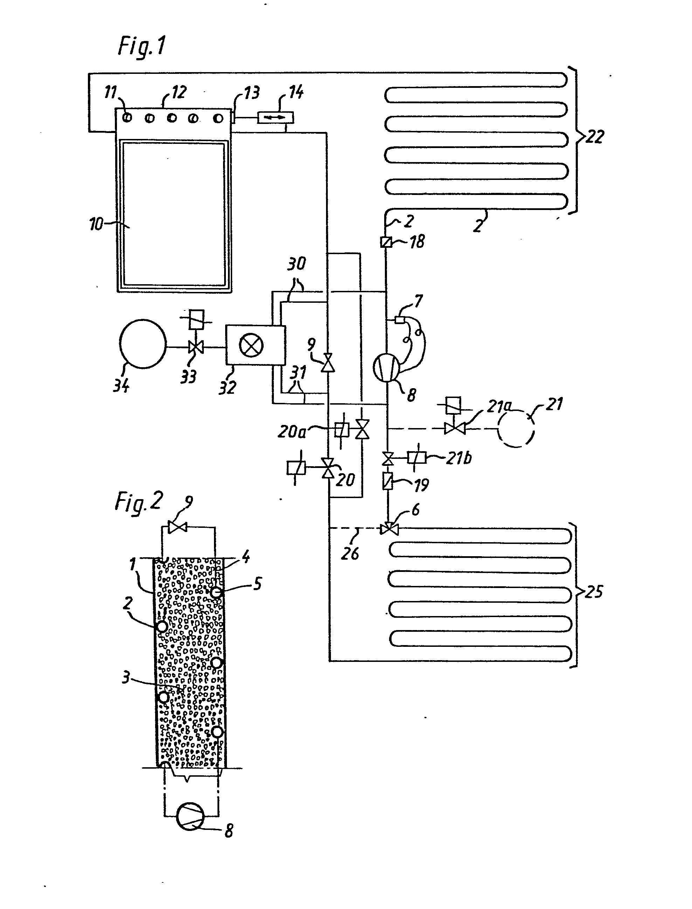

Gemäß den Fig. 1 und 2 weist die Wärmepumpenanlage
einen wärmeaufnehmenden Bereich 22 des Kältemittelkreislaufs auf, der gemäß Fig. 2 mit einer Wärmeaufnahmefläche 1 mit der Umweltatmosphäre in Berührung
steht. Die Wärmeaufnahmefläche 1 kann mit Dekorations-
oder anderen Verwirbelungselementen 27, beispielsweise
auch zum langsameren Abfließen von Regenwasser, versehen
sein. An der Innenseite der Wärmeaufnahmefläche 1 sind
Verdampferrohre 2 befestigt. In einem wärmeübergangsisolierten Abstand 23 von der Innenseite der Wärmeaufnahmefläche 1 sind auf ähnliche Weise Heizrohre
5 vorgesehen, welche an der Innenseite einer Wärmeabgabefläche 4 befestigt sind. Die Wärmeabgabefläche 4 kann
ebenfalls zur gleichmäßigeren Wärmeabgabe strukturiert
ausgebildet sein. Die Flächen 1, 4 sowie die Verdampfer-
und Heizrohre 2, 5 bestehen beispielsweise aus Kupfer,
Aluminium oder einer Aluminiumlegierung.

Der wärmeübergangsisolierende Abstand 23 ist mit einem
Wärmeisolationsmaterial 3 aus Styropor oder dgl. ausgefüllt bzw. ausgeschäumt.

Zwischen dem wärmeaufnehmenden Bereich 22 und dem wärmeabgebenden Bereich 25 des Kältemittelkreislaufs, der
die lediglich aus Heizrohren 5 und Wärmeabgabefläche 4
bestehenden Heizelemente 24 bildet, ist ein Kältemittelverdichter 8 geschaltet, dessen Leistung von einem Druck-
und/oder Temperaturfühler 7 geregelt wird, und zwar entweder beim Über- bzw. Unterschreiten vorgegebener Testwerte oder auch kontinuierlich.

Dem Bereich 25 nachgeschaltet ist ein Entspannungsventil 9,
über welches sich das Kältemittel, beispielsweise Frigen
bzw. Freon, abkühlt und von dort wieder in den wärmeaufnehmenden Kältemittel-Kreislaufbereich 22 gelangt.

Ab Regelung des Kältemittel-Kreislaufs kann ein Dreiwege-
Ventil 6 dienen, welches als Heizkörperregulierung wirkt
und bei entsprechender Verstellung über eine Überbrückungsleitung 26 entweder - bei voller Heizleistung - das Kältemittel in die Heizrohre 5 leitet oder - bei Abschaltung der
Heizleistung - die Heizrohre 5 überbrückt und das Kältemittel direkt zum Entspannungsventil 9 weiterleitet. Damit
wird der Kältemittel-Kreislauf nicht beeinträchtigt. Er heizt
sich bei Überbrückung der Heizrohre zunächst jedoch verstärkt
auf, bis bei Überschreiten maximal eingestellter Druck- und/
oder Temperaturwerte der Verdichter 8 vom Fühler 7 abgeschaltet
wird. Bei teilweiser Verstellung des Dreiwege-Ventils 6 erfolgt ein anteiliger Kältemittelfluß durch die Heizrohre 5 und
die Überbrückungsleitung 26. Die Wärmeaggregate können innerhalb des wärmeübergangsisolierenden Abstands 23 angeordnet
sein, so daß nur ein elektrischer Anschluß zu erfolgen braucht.

Jeweils vor und hinter dem Verdichter 8 können in Flußrichtung
öffnende Rückschlagventile 18, 19 in den Kältemittel-Kreislauf sowie in Flußrichtung vor dem Entspannungsventil 9 ein
signalgesteuertes Magnetventil 20 angeordnet sein. Ferner
ist vorzugsweise in Flußrichtung nach dem Verdichter 8 und
vor dem diesem nachgeschalteten Rückschlagventil 19 noch ein
Sicherheits-Aufnahmereservoir 21 an den Kältemittel-Kreislauf angeschlossen. Auf Lecksignal hin schließt ein weiterhin
vorgesehenes Magnetventil 21b und öffnet ein drittes Magnetventil 21a die Zuleitung zum Sicherheitsreservoir 21.

Bei z.B. regelungsbedingten Stillständen des Verdichters 8 schließt das Magnetventil 20 um einen Druckausgleich und damit einen Wärmeabfluß in den Bereich 22 zu verhindern.

Neben dem wärmeaufnehmenden Bereich 22 können noch weitere wärmeaufnehmende Elemente vorgesehen sein, wie beispielsweise ein oberhalb eines Fensters 10 (oder ebenso auch einer Tür) in einer Lufteintrittsöffnung 11 angeordneter gesonderter Verdampfer 12. Mit abnehmender Temperatur im Kreislaufbereich 22 sinkt der Druck in dieser Leitung, wodurch ein Druckzylinder 14 betätigt wird und die Lufteintrittsöffnungen 11 schließt, so daß der Luftaustritt an die Atmosphäre unterbrochen wird.

Als alternative Ausführungsform können zur Sicherung der Wärmepumpenanlage gegen größere Leckagen im Kältemittelsystem an beiden Kreislaufbereichen 22 und 25 Absaugleitungen 30 bzw. 31 angeschlossen sein. Über ein Leckverlust-Meßgerät 32 wird laufend festgestellt, ob irgendwelche größeren Leckagen vorliegen. Das Leckverlust-Meßgerät 32 betätigt im Falle einer Leckage ein Sicherheitsventil 33, mittels welchem über die Absaugleitungen 30 bzw. 31 das gesamte Kältemittel in ein Sicherheitsreservoir 34 abgezogen werden kann, und zwar beispielsweise durch eine schnelllaufende Pumpe oder ein genügend großes vorgehaltenes Vakuumvolumen innerhalb des Reservoirs.

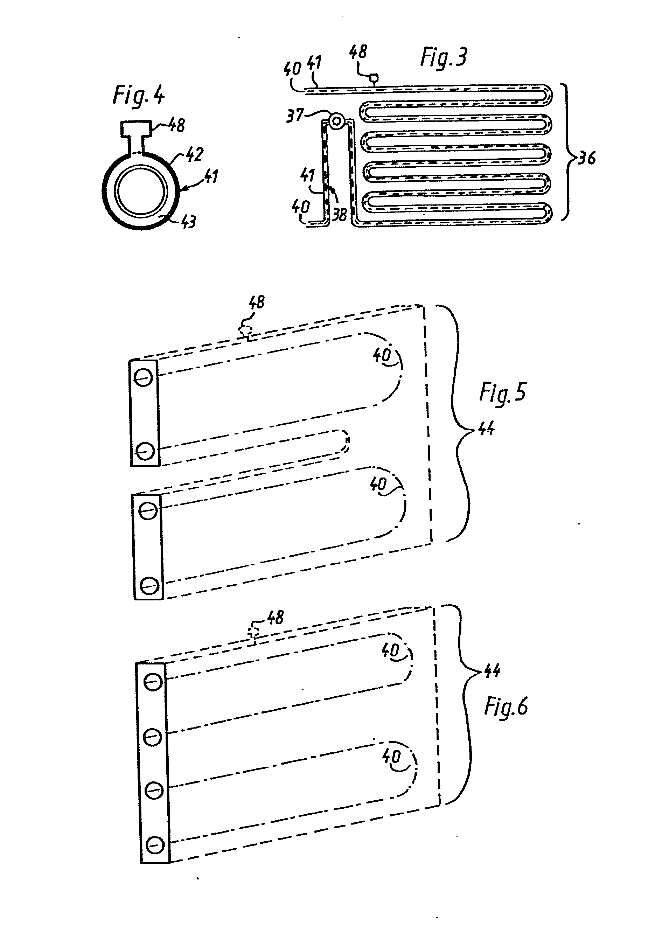

Gemäß Figur 3 sind Raumtemperatur-Regelventile 37 jedes einzelnen Heizkörpers 36 des Heizbereichs 24 (vgl. Fig. 1) am Ausgang 38 des Heizkörpers 36 angebracht. Dadurch ist eine individuelle Steuerung der einzelnen Heizkörper des Heizbereichs 24 möglich.

Als weitere Sicherheitsmaßnahme auf der Innenraum-Kreislaufseite sind die Heizrohre 40 der Heizkörper 36 mit einem Sicherheitsmantel 41 leckdicht umgeben. Gemäß Figur 4 besteht der Sicherheitsmantel 41 aus einem koaxial zum Heizrohr 40 angeordneten Ummantelungsrohr 42. Zwischen Heizrohr 40 und Ummantelungsrohr 42 ist ein Zwischenraum 43 vorgesehen, welcher mit einem gut wärmeübertragenden Medium, z.B. Wasser, gefüllt ist.

Gemäß den Fig. 5 und 6 sind mehrere Windungen der Heizrohre 40 gemeinsam von einer Sicherheits-Ummantelung 44 eingehüllt, wobei der Zwischenraum 43 mit einem gut wärmeübertragenden Medium, z.B. wiederum Wasser, gefüllt ist. Die Heizrohre 40 sind flüssigkeits- und gasdicht in dem Sicherheitsmantel 41 eingelagert. An die Sicherheitsummantelung ist ein auf Druckanstieg ansprechender Druckschalter 48 angeschlossen, welcher in den Sicherheitsmantel eingedrungenes Kältemittel anzeigt und ein Leckanzeige-Signal an die oben beschriebene Kühlmittelkreis-Regelung abgibt.

Die Heizkörper 36 können auf ihrer Sichtseite vorzugweise mit einer gut wärmeabstrahlenden Schicht, z.B. Keramikplatten, verkleidet und auch in Beton eingegossen sein.

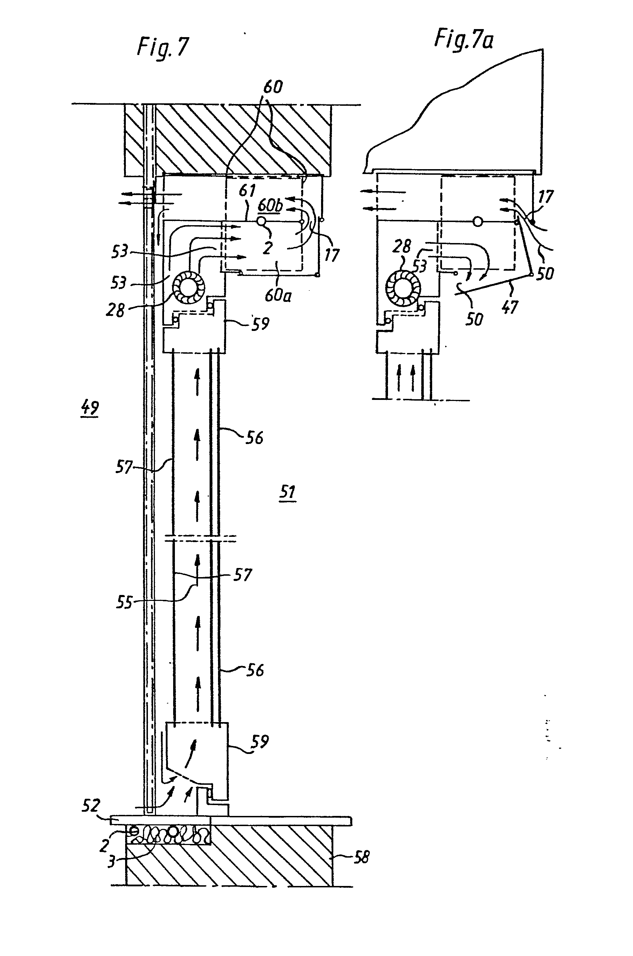

In Figur 7 und 7a ist eine bevorzugte Ausführungsform eines Fensters als wärmeaufnehmendes Element dargestellt, wobei dieses auch unabhängig von der oben beschriebenen Wärmepumpenanlage einsetzbar ist. Das Fenster ist in einer Gebäudewand 58 eingesetzt und besteht aus einem Fensterrahmen 59, einer inneren Isolierglasscheibe 56 und einer äußeren Scheibe 57. Am unteren Rand des Fensterrahmens 59 ist eine von außen in den Zwischenraum 55 zwischen den beiden Scheiben 56 und 57 mündende Lufteintrittsöffnung 54 vorgesehen. Der Luftaustritt erfolgt durch einen am oberen Rand des Fensterrahmens 59 aus

- 13 -

dem Zwischenraum 55 zwischen den beiden Scheiben 56, 57 herausführenden Luftzufuhrkanal 53. In diesem Luftzufuhrkanal ist ein Wärmetauscher 60 zum Entzug der von der den Zwischenraum 55 durchströmenden Luft in diesem aufgenommenen Wärme. Der Luftzufuhrkanal 53 mündet bei dem dargestellten Beispiel in das Rauminnere 51. Mittels eines Lüfters 28 wird die eintretende Außenluft durch den Wärmetauscher 60 in der Betriebsstellung gemäß Fig. 7 und durch eine Überströmöffnung 17 über den Abluftkanal 50 wieder nach außen gefördert. In der Betriebsstellung nach Fig. 7a erfolgt eine Umlenkung mittels einer Doppelklappe 47, wobei Innenluft entweichen kann, während Frischluft in den Raum gelangt. Die relativ warme Abluft im Innenraum 51 entweicht durch einen unterhalb der Raumdecke angeordneten, sich durch die Raumwand 58 hindurch erstreckenden Abluftkanal 50 an die Außenluft 49.

Im Abluftkanal 50 und im Luftzufuhrkanal 53 sind jeweils Wärmetauscherelemente - wie beispielsweise Wärmetauscherfläche 60b bzw. 60a - angeordnet, welche einem für beide Kanäle gemeinsamen Wärmetauscher 60 zugeordnet, d.h. mit ihm verbunden sind.

Die jeweiligen Wärmetauscherflächen 60a und 60b sind in der dargestellten Ausführungsform darauf abgestellt, daß die Flächen 60a die Wärme des durch den Luftzufuhrkanal 53 ins Rauminnere 51 fließenden Luftstroms aufnehmen und zugleich der durch den Abluftkanal 50 abfließenden Luft ebenfalls die Wärme entziehen und über einen nicht dargestellten Verdichter wieder der Raumheizung nutzbringend zuführen. Der Wärmetauscher nutzt also zugleich beide entgegengesetzte Wärmeströmungen aus, wobei die durch den Luftzufuhrkanal 53 in das Rauminnere 51 eintretende Luft etwa entlang der Scheibe 56 wie vorgesehen nach unten sinkt (Fig. 7a).

Der Wärmetauscher 60 wird doppelt genutzt. Dabei können beide Luftströme nur mit einer gemeinsamen Trennwand 61 voneinander getrennt sein.

Wenn die Abluft aus dem Raum-Abluftkanal 50 nach unten abgelenkt wird, auf einfachste Weise durch einen Rolladen, dann gelangt diese wenigstens teilweise im Kreislauf zurück zur Lufteintrittsöffnung 54.

Das beschriebene Fenster gemäß den Figuren 7 und 7a eignet sich ganz besonders als zusätzliches wärmeaufnehmendes Element der Wärmepumpenanlage gemäß Figur 1, kann jedoch auch unabhängig davon nachträglich in bestehende Gebäude eingesetzt werden, insbesondere in Gebäude mit großen Glasfronten. Dabei kann für einen solchen Einbau auch eine Kombination mit einem kompakten Heizelement gemäß Fig. 2 mit dem vorgenannten Fenster erfolgen.

Vorzugsweise sind die Wärmetauscherflächen 60a und 60b, d.h. die gesamte dem Fenster zugeordnete Wärmetauscheranordnung im oberen Teil des Fensterrahmens 59 oder im oberen Teil des Fensterstocks angeordnet. Das Fenster mit dem Wärmetauscher stellt dann eine in sich geschlossene Montageeinheit dar.

Eine weitere Möglichkeit gemäß Fig. 7 besteht darin, in einer Fensterbank eingelagert in Isolationsmaterial 3 weitere Verdampferrohre 2 vorzusehen.

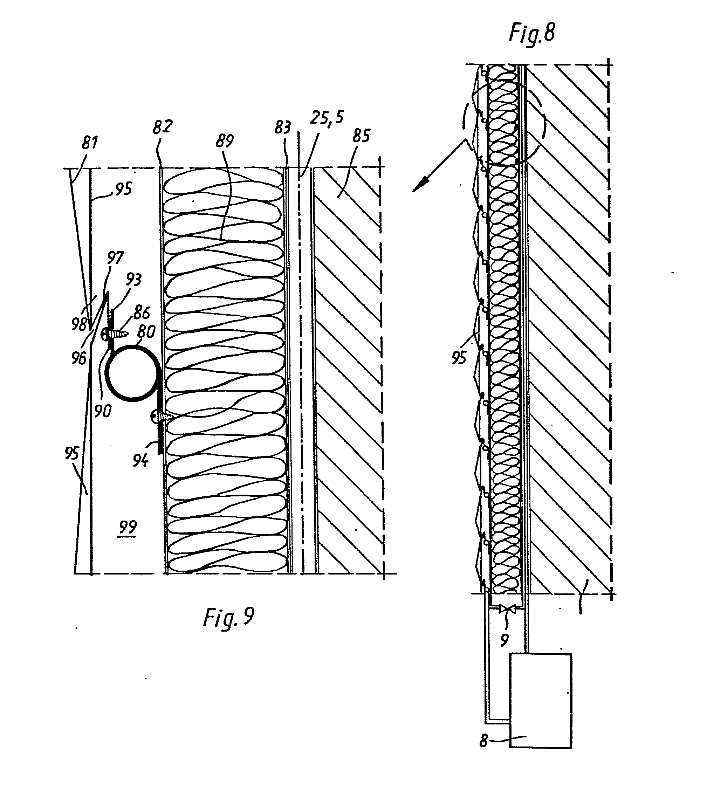

Eine besonders wirkungsvolle Ausführung des wärmeaufnehmenden Bereichs 22 der Wärmepumpenanlage gemäß Figur 1 stellen die Luftkollektoren gemäß den Fig. 8 bis 12 dar. Der Luftkollektor gemäß den Fig. 8 und 9 besteht von außen nach innen aus einer Fassadenverkleidung 81, einem von einem Wärmetauschermedium bzw. dem bei der Wärmepumpenanlage gemäß Fig. 1 verwendeten Kältemittel durchströmten wärmeaufnehmenden Rohrsystem 80 und einer wärmeisolierenden Schicht 89. Diese Fassadenverkleidung ist an der Außenseite einer Gebäudewand 85 befestigt.

Das wärmeaufnehmende Rohrsystem 80 besteht aus einer Vielzahl von sich horizontal erstreckenden Einzelrohren 92, die im Abstand voneinander parallel zur Gebäudewand 85 angeordnet sind und zu einer geschlossenen Rohrschlange miteinander verbunden sind.

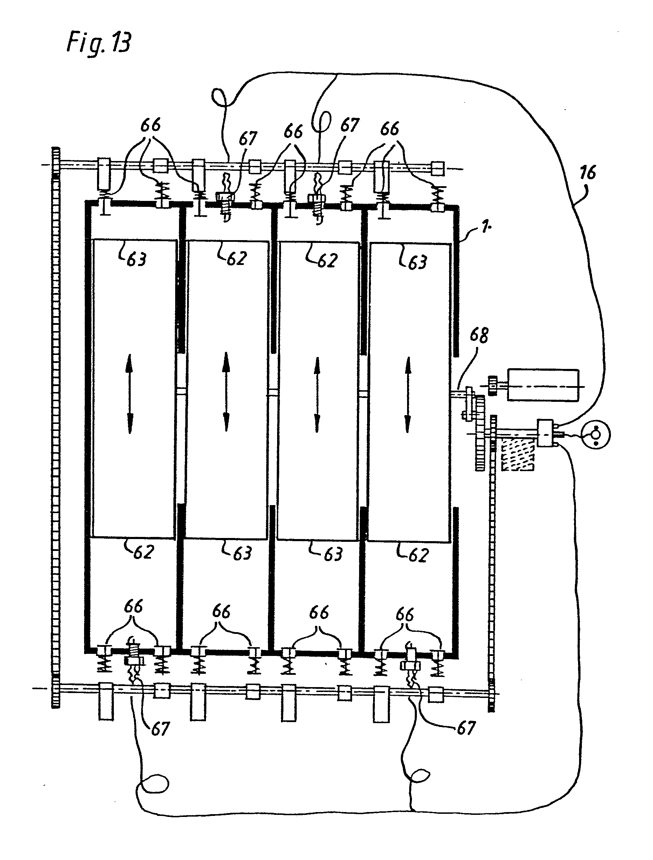

Die Einzelrohre 92 sind jeweils mit zwei Befestigungsflanschen 93, 94 versehen, die an gegenüberliegenden Seiten eines jeden Rohres etwa tangential und parallel zueinander verlaufend angeordnet sind. Über die jeweils unteren Befestigungsflansche erfolgt die Befestigung der Einzelrohre 92 an der Gebäudewand 85, und zwar mittels Wanddübel 87. An den oberen Befestigungsflanschen 93 wird die Fassadenverkleidung 81 angebracht. Das Rohrsystem 80 stellt somit die tragende Konstruktion für die Fassadenverkleidung 81 oder eine Dacheindeckung gemäß Fig. 12a und 12b dar.

Die Fassadenverkleidung 81 ist bei dem dargestellten Ausführungsbeispiel aus einer Vielzahl von im Abstand von der Gebäudewand 85 bzw. wärmeisolierenden Schicht 89 angeordneten Fassadenelementen 95 (bzw. Dachelementen 107) zusammengesetzt. Diese Fassadenelemente bestehen vorzugsweise aus witterungsbeständigem Aluminium. Die Fassadenelemente 95 weisen jeweils unter Bildung eines innenliegenden, sich etwa parallel zur Gebäudewand erstreckenden Flanschteils 90 eine im montierten Zustand nach unten offene, etwa keilförmige Einbuchtung 96 auf, in die die obere Kante 97 des darunter angeordneten Fassadenelements eingeschoben ist. Die Flanschteile 90 der Fassadenelemente 95 sind jeweils an den in den Figuren 8 und 9 oberen außenliegenden Befestigungsflanschen 93 der Einzelrohre 92 befestigt. Zur Befestigung dieser beiden Flansche dienen Schrauben 86. Wie Figur 9 zeigt, hat der untere Rand der Fassadenelemente 95 jeweils den Querschnitt eines spiegelbildlichen "Z". Dadurch zeichnen sich die Fassadenelemente 95 u.a. durch eine gewisse Elastizität in Richtung senkrecht zur Fassade aus.

Der durch die Einbuchtung 96 im unteren Bereich eines jeden Fassadenelements 95 gebildete Innenzwickel 98 ist am unteren Ende mit nicht dargestellten Öffnungen zum Ablauf von Schwitzwasser und zur Entlüftung des Zwischenraums 99 versehen, der durch die Fassadenelemente 95 und waagerecht verlaufende Einzelrohre 92 einerseits und die wärmeisolierende Schicht 89 andererseits begrenzt ist. Zur Durchlüftung der Zwischenräume 99 weisen vorzugsweise die Flansche 90, gegebenenfalls auch die Flansche 93 der Einzelrohre 92 Durchbrüche auf. Diese Durchbrüche sind insbesondere dann von Bedeutung, wenn die Zwischenräume 99 über Abluftkanäle (z.B. Abluftkanal 50 in Fig. 7) mit den Innenräumen des Gebäudes in Verbindung stehen.

Die oben beschriebene Ausführungsform mit den Befestigungsflanschen 93 hat sich als besonders vorteilhaft erwiesen, da die mit der Fassadenverkleidung 81 verbundenen Flansche 93 großflächige Wärmebrücken bilden. Den Fassadenelementen 95 kann dadurch eine relativ große Menge Wärme pro Zeiteinheit entzogen werden.

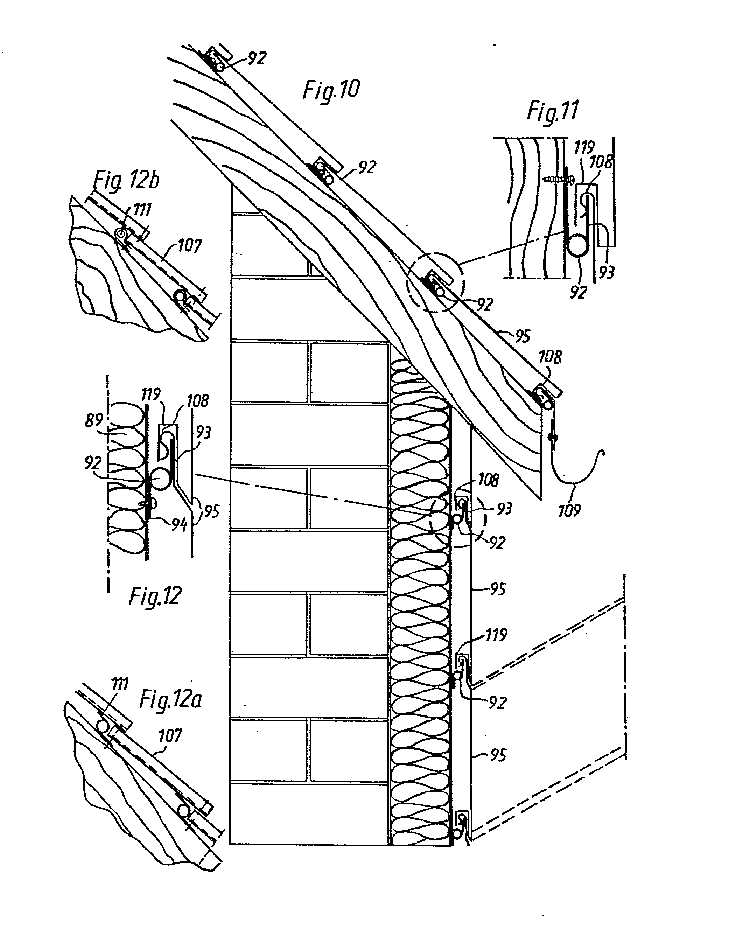

In den Fig. 10 bis 12 ist eine etwas abgewandelte Ausführungsform der Fassadenelemente und deren Befestigung an den Einzelrohren 92 des wärmeaufnehmenden Rohrsystems dargestellt. Die Fassadenelemente sind mit der Bezugsziffer 95' gekennzeichnet. Die Fixierung der Fassadenelemente 95' an den sich etwa parallel zur Gebäudewand nach oben erstreckenden Anschlußflanschen 93 der Einzelrohre 92 erfolgt jeweils durch am oberen Rand der Fassadenelemente ausgebildete Klammernformen 108, wobei vorzugsweise der gesamte obere Rand der Fassadenelemente als nach innen eingezogene Federklammer ausgebildet ist. In ähnlicher Weise können Dachelemente 95" gestaltet sein, die an einem auf dem Dach eines Gebäudes angebrachten Rohrsystem, das auch als U-Profil ausgebildet sein kann, entsprechend dem Fassadenrohrsystem 80 befestigbar sind (vgl. Figuren 10 und 11). Der untere Rand der Fassadenelemente 95' bzw. Dachelemente 95" ist haubenartig ausgebildet und von oben her über die Klammerform 108 schiebbar bzw. stülpbar. Der untere haubenförmige Rand wird dabei vorzugsweise durch ein etwas oberhalb der unteren Begrenzung des Fassadenelemts 95' bzw. Dachelements 95" auch gegenüber der äußeren Begrenzungsfläche dieses Elements nach innen versetzt angeordnetes, nach unten offenes U-Profil 119 gebildet. Die lichte Weite zwischen den beiden Schenkeln des U-Profils 119 ist vorzugsweise so bemessen, daß es mit geringer Spannung über die Klammerform 108 stülpbar bzw. schiebbar ist. Durch diese Konstruktion wird ein fester Sitz der Fassadenelemente 95' bzw. Dachelemente 95" relativ zueinander und an der durch die Rohre 92 gebildeten Tragkonstruktion gewährleistet. Ferner ist die Montage der Fassadenelemente 95' bzw. Dachelemente 95" denkbar einfach. Besondere Werkzeuge sind hierzu nicht erforderlich. Entsprechend einfach ist auch die Demontage.

Wie Figur 11 zeigt, können die Befestigungs- bzw. Anschlußflansche der Einzelrohre 92 in dieselbe Richtung weisen. Die Anordnung bzw. Richtung der Befestigungsflansche 93,94 richtet sich jeweils nach der Befestigungsmöglichkeit an der Gebäudewand bzw. am Dach 100 eines Gebäudes.

Figur 10 zeigt auch noch eine besonders vorteilhafte Integration einer Dachrinne 109 in das beschriebene System. Die Dachrinne 109 wird mittels der beschriebenen Klammern 108 an dem dem Dachrand benachbarten Rohr 92 des wärmeaufnehmenden Dach-Rohrsystems entsprechend den Fassadenelementen 95'

bzw. Dachelementen 95" eingehängt und festgeklemmt. Dadurch ist es möglich, auch die dem Regenwasser immanente Wärme zur Gebäudeheizung auszunutzen.

Die gemäß Figur 12a und 12b dargestellte Rohraufnahme- und Befestigungsprofile eignen sich zur gleichzeitigen Halterung sowohl der Einzelrohre 2 als auch der Dacheindeckungselemente, und zwar bei gesichert gutem Wärmeübergang.

Der beschriebene Luftkollektor ist einfach in der Montage und Konstruktion. Eine nachträgliche Installation bereitet keine Schwierigkeiten. Er läßt sich auch besonders wirkungsvoll mit der Wärmepumpenanlage gemäß Fig. 1 kombinieren.

Der Luftkollektor kann gemäß Fig. 8 und 9 vorzugsweise von außen nach innen auch aus folgenden Elementen bestehen:

- Fassadenverkleidung 81
- von einem Wärmetauschermedium bzw. Kältemittel durchströmtes wärmeaufnehmendes Rohrsystem 80,
- Befestigungs-Aluminiumband 83
- wärmeisolierende Schicht 89
- Aluminiumfolie 83 und
- als wärmeabgebenden Bereich 25 mittels Heizrohren 5 gemäß Figur 1 ein Rohrsystem, das unmittelbar an der Außenseite der Gebäudewand 85 anliegt. Dieses wärmeabgebende Rohrsystem dient auf diese Weise zur Beheizung der Gebäudewand 85 von außen.

Bei dieser Ausführungsform kann bestimmten Gebäudewandteilen bzw. -bereichen jeweils ein wärmeaufnehmendes und wärmeabgebendes Teil-Rohrsystem, die parallel zueinander geschaltet sind, zugeordnet sein. Dadurch ist es z.B. möglich, nur einzelne Räume durch Erwärmung der entsprechenden Gebäudewand bzw. Gebäudewände zu beheizen. Insbesondere aber wird durch die hohe Speicherwirkung der Gebäudewand die verstärkte Ausnutzung von Nachtstromzeiten ermöglicht.

Als Verdichter für die oben beschriebene Wärmepumpenanlage (Fig. 13 bis 15) dient vorzugsweise eine Kolbenmaschine, bei der Antriebs- und Verdichterkolben in einem abgeschlossenen Zylinderraum angeordnet und zu einem Doppelkolben fest miteinander verbunden sind, so daß ein nach außen geschlossenes System entsteht. Durch Verbrennung im Antriebsteil des Zylinders oder durch unter Druck stehendem Dampf wird der Doppelfunktionskolben zur Arbeitsseite bewegt, um dort einen Kompressionsdruck zu erzeugen oder um Flüssigkeiten oder Gase zu verdrängen. Die Vorteile einer derartigen Kolbenmaschine bzw. eines derartigen Verdichters bestehen insbesondere darin, daß die durch den Explosions- oder Dampfdruck freigesetzte Energie ohne Umwege über energieverzehrende Aggregate, wie Wälzlager, Antriebswellen, Getriebe etc. in Arbeitsenergie umgesetzt wird. Insofern trägt auch der Verdichter zur Erhöhung des Wirkungsgrades der erfindungsgemäßen Wärmepumpenanlage bei.

Weiterhin begünstigt die kompakte Bauweise die Wärmerückgewinnung der bei dem Verbrennungsvorgang oder dem Dampfdruck entstehenden Abwärme. Durch die enorm materialeinsparende Bauweise (keine Wälzlager, Antriebswellen, Getriebeaggregate) sind die Herstellungskosten der Verdichter-Kolbenmaschine auch relativ niedrig.

Ein weiterer Vorteil ist die von Verschleißteilen freie Bauweise, die zu einer bedeutend längeren Lebensdauer im Vergleich zu bisherigen Verdichter-Konstruktionen führt.

Die in Figur 13 dargestellte Ausführungsform eines Kolben-Verdichters umfaßt vier Doppelkolben 62,63, die in entsprechenden Zylindern hin- und herverschiebbar angeordnet sind. Der Antrieb der Doppelkolben erfolgt durch Explosion z.B. eines Kraftstoff-Luft-Gemisches in den Doppelkolben zugeordneten Brennkammern 64. Den Brennkammern 64 sind ebenso wie die jeweils gegenüberliegend angeordneten Arbeitskammern 65 nockengesteuerte Ventile 66 zugeordnet. Die Zündung des Kraftstoff-Luft- Gemisches in den Brennkammern 64 erfolgt mittels Zündkerzen 67. Die vier Doppelkolben sind durch eine gemeinsame Verbindungsstange 68 miteinander verbunden, so daß sie nur gemeinsam hin- und herbewegt werden können. Die Verbindungsstange 68 steht mit einem Abtrieb in Wirkverbindung. Durch abwechselnde Explosion des Kraftstoff-Luft-Gemisches in den gegenüberliegend angeordneten Brennkammern 64 werden die Doppelkolben 62,63 ständig hin- und herbewegt. Dabei wird das sich in den Arbeitskammern 65 befindliche Arbeitsmedium taktweise komprimiert. Das Arbeitsmedium ist bei Einsatz der beschriebenen Maschine als Verdichter in der Wärmepumpenanlage gemäß Figur 1 natürlich das dort verwendete Wärmetauschermedium.

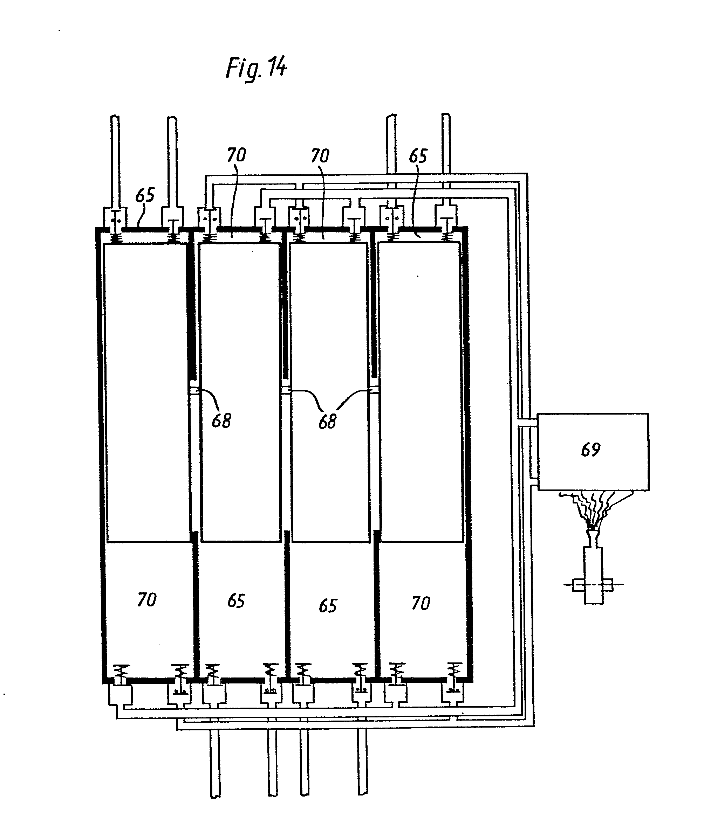

Bei der Ausführungsform gemäß Fig. 14 erfolgt der Antrieb der Doppelkolben mittels Dampf, der in einem gesonderten Dampfkessel 69 erzeugt wird. Die Arbeitsräume der Maschine gemäß Figur 14 sind ebenfalls mit der Bezugsziffer 65 gekennzeichnet. In die den Arbeitskammern jeweils gegenüberliegend angeordneten Kammern 70 wird der im Dampfkessel 69 erzeugte Dampf unter Druck taktweise eingeleitet, und zwar so, daß abwechselnd die unteren und oberen Kammern 70 dampfbeaufschlagt werden. Dadurch wird wiederum die oben beschriebene Hin- und Herbewegung der Doppelkolben 62, 63 erhalten. Im übrigen entspricht die Funktionsweise des Kolben-Verdichters gemäß Fig. 14 derjenigen des Kolbenverdichters gemäß Fig. 13.

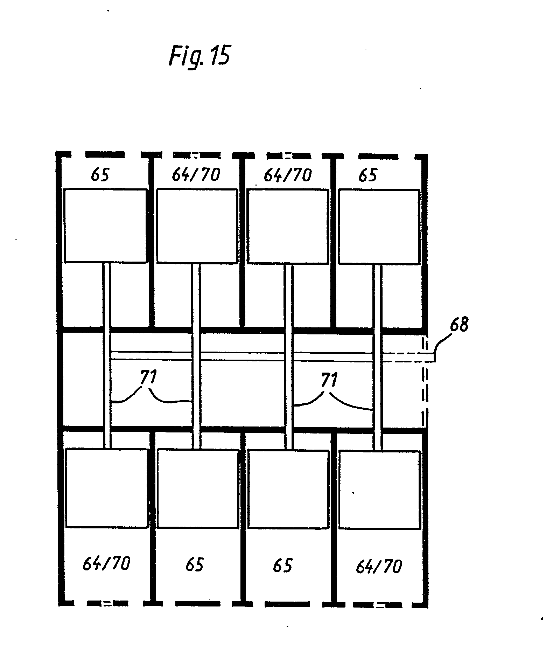

Die Ausführungsform gemäß Figur 15 unterscheidet sich von den voranbeschriebenen Ausführungsformen nur dadurch, daß die Doppelkolben jeweils durch zwei Einzelkolben gebildet werden, die durch eine starre Verbindungsstange 71 miteinander verbunden sind. Den Einzelkolben sind dabei jeweils abgeschlossene Zylinder zugeordnet.

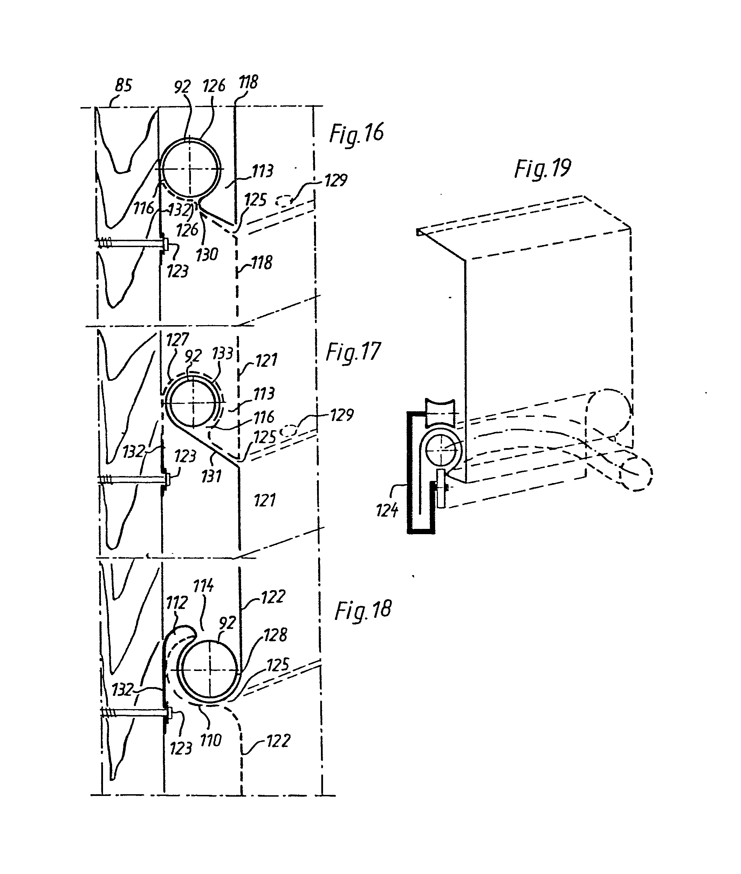

In den Figuren 16 bis 19 ist noch ein besonders vorteilhaftes Fassadenelement für einen Luftkollektor schematisch dargestellt, mit dem einerseits die Montage der Wärmeleitrohre des Rohrleitungssystems in Verbindung mit dem Fassadenelement erheblich vereinfacht wird und andererseits durch Ausnutzung des Eigengewichts insbesondere des Fassadenelements und/oder aber auch der Wärmeleitrohre ein dauerhaft enger Wärmeleitungskontakt gewährleistet ist. Die Fassadenelemente 118, 121 und 122 sind an der Gebäudewand 85 mittels Schrauben 123 befestigt. Das Fassadenelement 118 ist in langgestreckter Form ausgebildet, vorzugsweise bandförmig, und erstreckt sich im wesentlichen quer über die gesamte Breite einer Gebäudewand 85. Jeweils an einer Längskante bzw. Längsrandseite weist jedes Fassadenelement 118 im Querschnittsprofil eine Sicke bzw. Ausnehmung 126 zur Aufnahme eines Wärmeleitrohrs 92 der oben beschriebenen Art auf.

Im Querschnittsprofil des Fassadenelements 118 gemäß Figur 16 ist die Ausnehmung 126 entsprechend den Außenkonturen des Wärmeleitrohrs 92 ausgebildet, und zwar derart, daß die das Wärmeleitrohr 92 umgreifende Innenkontur der Ausnehmung 126 kontakteng um das Wärmeleitrohr anliegt, vorzugsweise auch unter einer gewissen Vorspannung, um einen guten Wärmeübergangskontakt zu gewährleisten.

Außerdem ist die freie Öffnung 116 der Ausnehmung 126 deutlich enger als der Außendurchmesser des Wärmeleitrohrs 92, so daß beim Einlegen des Wärmeleitrohrs 92 in die Ausnehmung diese Öffnung auseinandergedrückt bzw. aufgeweitet wird, um dann bei eingelegtem Wärmeleitrohr aufgrund der Eigenelastizität des Materials des Fassadenelements 118 wieder auf fast die ursprüngliche Weite zurückfedern. Die Öffnung 116 ist ferner aufgrund eines druckfesten Profilabschnitts 113 des Fassadenelements 118 mit einer gewissen Komponente gegen die Wand 85 hin gerichtet, so daß das Wärmeleitrohr 92 dadurch mit einer gegen die Wand 85 gerichteten Schwerkraftkomponente festgehalten wird. Dieser Halt wird noch insbesondere dadurch unterstützt, daß der Profilabschnitt 113 das Eigengewicht des Fassadenelements 118 gegen die Wand 85 hin drückt, zumal die feste Anbringung des Fassadenelements 118 an der Gebäudewand 85 mittels einem mit Schrauben 123 befestigten Laschenrand 132 erfolgt, welcher auf der dem Profilabschnitt 113 gegenüberliegenden Seite der Öffnung 116 liegt. Damit wirkt also das gesamte Eigengewicht des Fassadenelements 118 sich über die Wärmeleitrohre 92 abstützend als kontaktfördernd zwischen Wärmeleitrohr und Fassadenelement 118 aus.

Zusätzlich kann die jeweils andere, anschließend angeordnete Längsrandseite 130 in einer Form ausgebildet sein, in der es einmal schräg unter dem Profilabschnitt 113 greift - und damit gleichzeitig formschlüssig gehaltert ist - und zum anderen die Öffnung 116 mindestens teilweise überdeckt, wobei es auch gegen das Wärmeleitrohr anliegt.

Gemäß Figur 17 greift die obere Längsrandseite 131 noch mit einer um das Wärmeleitrohr innerhalb der Ausnehmung 127 angeordneten Zunge 133 wenigstens teilweise um das Wärmeleitrohr 92 herum, wodurch sich sowohl ein verstärkter Wärmeübergangskontakt als auch eine zusätzliche Befestigung jedes Fassadenelements 121 an seinem oberen Rand ergibt.

Bei der Ausführung gemäß Figur 18 besitzt das Wandverkleidungselement 122 neben dem Laschenrand 132 einen zungenförmig gebogenen Federungsabschnitt 112, der mit der Außenwand des Fassadenelements 122 eine Ausnehmung 128 zur Aufnahme des Wärmeleitrohrs 92 bildet, deren Öffnung 114 wiederum kleiner ist als der Durchmesser des Wärmeleitrohrs 92. Das Wärmeleitrohr 92 wird bei der Montage durch die nach oben offene Öffnung 114 in die Ausnehmung 128 hineingedrückt.

Während bei den Figuren 16 und 17 vornehmlich das Eigengewicht der Fassadenelemente 118 und 121 den Kontakt des Wärmeleitrohres 92 gegen die Innenseite der Ausnehmung 126 und 127 verstärkt und aufrechterhält, wird bei der Ausführungsform gemäß Figur 18 dieser Kontakt durch das gegen den Federungsabschnitt 112 gedrängte Eigengewicht des Wärmeleitrohrs 92 gewährleistet.

Die jeweils obere Längsrandseite 110 des nach unten folgenden Fassadenelements 122 kann zungenförmig in den Federungsabschnitt 112 hineingreifen und dabei sowohl die notwendige Haltefunktion erfüllen als auch dessen Federwirkung zusätzlich verstärken.

Lüftungsschlitze 125 und Entlüftungslöcher 129 dienen der Entlüftung der Fassadenelemente 118, 121 bzw. 122.

Bei der beschriebenen Ausführungsform werden die Wärmeleitrohre 92 bei der Montage vorzugsweise als durchgehende, im wesentlichen einstückige Rohre mittels eines Rollenpreßwerkzeuges 124 in die Ausnehmungen 126, 127 und 128 eingepreßt (Fig. 19) und jeweils an den Enden derart umgebogen, daß sie als Endlösrohre - in die jeweils nach unten folgenden Wandverkleidungselemente 118, 121 bzw. 122 weiterverlegt werden können. Damit kann die Montage bei langgestreckten Elementen in einfachster Weise erfolgen, wobei die Endlos-Wärmeleitrohre sowohl an der Haus-Außenfassade als auch als Innen-Heizschlangen verwendet werden können.

- 1 -

<u>Patentansprüche</u>

1. Wärmepumpenanlage zur Aufnahme von Wärme aus der Umgebungsatmosphäre mit einem der Umgebungstemperatur ausgesetzten Kältemittelkreislaufbereich, mit z.B. Freon bzw. Frigen als Kältemittel, sowie einem diesem nachgeschalteten mit einer Regeleinrichtung arbeitenden Verdichter und einem Verdampfer, zwischen denen ein wärmeabgebender Bereich des Kältemittelkreislaufs eingeschaltet ist, dadurch gekennzeichnet, daß der wärmeabgebende Bereich (25) des Kältemittelkreislaufs als direkt vom Kältemittel der Wärmepumpe durchströmtes und unmittelbar an die zu erwärmende Innenraumatmosphäre wärmeabgebender Heizbereich (24) ausgebildet ist.

2. Wärmepumpenanlage nach Anspruch 1, gekennzeichnet durch eine mit einer Seite der Umgebungsatmosphäre zugewandten Wärmeaufnahmefläche (1), mit an deren anderer Seite befestigten Verdampferrohren (2) sowie eine mit einer Seite dem zu beheizenden Innenraum zugewandten Wärmeabgabefläche (4), an deren anderer Seite der wärmeabgebende Heizbereich in Form von daran befestigten Heizrohren (5) vorgesehen ist, wobei zwischen Wärmeaufnahme- und Wärmeabgabefläche (1;4) ein wärmeübergangsisolierter Abstand (23) angeordnet ist.

3. Wärmepumpenanlage nach Anspruch 2, dadurch gekennzeichnet, daß die Wärmeabgabefläche (4) aus zwei Schichten besteht, zwischen denen Hohlräume zur Durchleitung des Kältemittels vorgesehen sind.

4. Wärmepumpenanlage nach einem der Ansprüche 2 oder 3, dadurch gekennzeichnet, daß sie als kompaktes und selbsttragendes, in sich fest zusammengefügtes Einbau- bzw. Wandelement mit vorgegebenen Flächen und/oder Raummaßen ausgeführt ist, wobei der wärmeübergangsisolierte Abstand (23) mit einem vorzugsweisen flächen- bzw. raumstabilen Wärmeisolationsmaterial (3), z.B. Styropor oder Polyurethan, ausgefüllt ist.

5. Wärmepumpenanlage nach einem der Ansprüche 2 bis 4, dadurch gekennzeichnet, daß der Verdichter (8) innerhalb des wärmeübergangsisolierten Abstands (23) zwischen der Wärmeaufnahme- und der Wärmeabgabefläche (1;4) angeordnet und das Einbau- bzw. Wandelement allein über einen elektrischen Anschluß für den eingebauten Verdichter anschließbar ist.

6. Wärmepumpenanlage nach einem der vorhergehenden Ansprüche, dadurch gekennzeichnet, daß jeweils vor und hinter dem Verdichter (8) ein in Fließrichtung öffnendes Rückschlagventil in den Kältemittelkreislauf sowie in Fließrichtung vor dem Entspannungsventil (9) ein signalgesteuertes Magnetventil (20) eingeschaltet ist.

7. Wärmepumpenanlage nach Anspruch 6, dadurch gekennzeichnet, daß das Magnetventil (20) bei Stillstand des Verdichters (8) schließbar ist.

8. Wärmepumpenanlage nach einem der vorhergehenden Ansprüche, dadurch gekennzeichnet, daß parallel zum Entspannungsventil (9) und zum Magnetventil (20) eine Umgehungsleitung mit einem Magnetventil (20a) angeordnet ist.

9. Wärmepumpenanlage nach einem der vorhergehenden Ansprüche, dadurch gekennzeichnet, daß an den gesamten Kältemittelkreislauf ein Leckverlustmeßgerät (32) angeschaltet ist, welches bei Überschreiten eines festeingestellten Leckverlust-Maximalwertes ein Sicherheitsventil (33) öffnet und ein schnelles Abziehen des gesamten Kältemittels in ein Sicherheitsreservoir (34) einleitet.

10. Wärmepumpenanlage nach einem der vorhergehenden Ansprüche, dadurch gekennzeichnet, daß in Fließrichtung nach dem Verdichter (8) und vor dem diesem nachgeschalteten Rückschlagventil (19) ein Sicherheits- und Aufnahmereservoir (21) an den Kältemittelkreislauf angeschaltet ist, und daß vor diesem Reservoir (21) ein Magnetventil (21a) sowie vor dem Rückschlagventil (19) ein weiteres Magnetventil (21b) angeordnet ist.

11. Wärmepumpenanlage nach Anspruch 10, dadurch gekennzeichnet, daß die Magnetventile (21a und 21b) auf ein Leckanzeig-Signal hin, betätigbar sind, durch welches das Magnetventil (21b) verschließbar ist und das Magnetventil (21a) geöffnet wird.

12. Wärmepumpenanlage nach einem der vorigen Ansprüche, dadurch gekennzeichnet, daß die Raumtemperatur-Regelventile (37) jedes einzelnen Heizkörpers (36) des Heizbereichs (24 am Ausgang (38) des Heizkörpers (36) angebracht sind.

13. Wärmepumpenanlage nach einem der vorigen Ansprüche, dadurch gekennzeichnet, daß die Heizrohre (40) der Heizkörper (36) mit einem Sicherheitsmantel (41) leckdicht umgeben sind.

14. Wärmepumpenanlage nach Anspruch 13, dadurch gekennzeichnet, daß der Sicherheitsmantel (41) aus einem koaxial zum Heizrohr (40) angeordneten Ummantelungsrohr (42) besteht.

15. Wärmepumpenanlage nach Anspruch 14, dadurch gekennzeichnet, daß zwischen Heizrohr (40) und Ummantelungsrohr (42) ein Zwischenraum (43) vorgesehen ist, welcher mit einem gut wärmeübertragenden Medium ausgefüllt ist.

16. Wärmepumpenanlage nach einem der Ansprüche 14 oder 15, dadurch gekennzeichnet, daß mehrere Windungen der Heizrohre (40) gemeinsam von einer Sicherheits-Ummantelung (44) eingehüllt sind, welche mit einem gut wärmeübertragenden Medium gefüllt sind.

17. Wärmepumpenanlage nach Anspruch 16, dadurch gekennzeichnet, daß die Heizrohre (40) flüssigkeits- und gasdicht in einen gut wärmeleitenden Körper aus z.B. Keramik oder Beton als Sicherheitsmantel (41) eingelagert sind, welcher den eigentlichen Heizkörper bildet und mit einer gut wärmeabstrahlenden Schicht z.B. aus Keramikplatten verkleidet ist.

18. Wärmepumpenanlage nach einem der Ansprüche 16 bis 17, gekennzeichnet durch einen auf einen vorbestimmten Druckanstieg zwischen Heizrohr (40) und Sicherheits- ummantelung (41;44) ansprechenden Druckschalter (48), welcher als Leckanzeige ein Signal an die Kühlmittelkreis-Regelung abgibt.

19. Wärmepumpenanlage nach einem der vorhergehenden Ansprüche insbesondere unter Anschluß an ein Fenster mit mindestens einer in einem Fensterrahmen angeordneten Scheibe, gekennzeichnet durch eine in einem Fensterrahmen (59) im Abstand von der Scheibe (56) angeordnete äußere zweite Scheibe (57), eine am unteren Rand des Fensterrahmens angeordnete, von außen in den Zwischenraum zwischen den beiden Scheiben (56,57) mündende Lufteintrittsöffnung (54), einen am oberen Rand des Fensterrahmens (59) in einem die luftflußabseitige Seite des Zwischenraums (55) zwischen den beiden Scheiben fortsetzenden Luftzufuhrkanal (53) angeordneten Wärmetauscher (60), welcher der Zuluft Wärme entzieht und Wärmetauscherelemente (60b) in einem oberhalb des Luftzufuhrkanals (53) angeordneten Abluftkanal (50) besitzt, wobei der Wärmefluß beider Kanäle (53;50) miteinander kombiniert auf den gleichen Wärmetauscher geschaltet ist.

20. Wärmepumpenanlage nach Anspruch 19, dadurch gekennzeichnet, daß der Abflußkanal (50) und der Luftzufuhrkanal (53) durch eine wärmeleitende Trennwand (61) voneinander getrennt sind, welche zugleich als Wärmetauscherfläche vorgesehen ist.

21. Wärmepumpenanlage nach Anspruch 20, dadurch gekenn-zeichnet, daß der Abluftkanal (50) wahlweise durch eine Überströmöffnung (17) mit dem Luftzufuhrkanal (53) oder mit der Raumluft verbindbar ist.

22. Wärmepumpenanlage nach einem der vorhergehenden Ansprüche 19 - 21, gekennzeichnet durch einen im Bereich oberhalb des Luftzufuhrkanals (53) vorgesehenen Lüfter (28).

23. Wärmepumpenanlage nach einem der vorhergehenden Ansprüche 19 - 22, dadurch gekennzeichnet, daß der Abluftkanal (50) mindestens teilweise von außen gegen die äußere zweite Scheibe (57) umlenkbar ist.

24. Wärmepumpenanlage nach einem der vorhergehenden Ansprüche, dadurch gekennzeichnet, daß im wärmeaufnehmenden Kältemittel-Kreislaufbereich (22) mindestens eine auf den Druck und/oder die Temperatur in der Kältemittelleitung ansprechende Verstelleinrichtung, z.B. ein Druckzylinder (14), angeordnet ist, welcher bei Druck- und/oder Temperaturabfall Durchlüftungsöffnungen (11) der Raum-Be- und Entlüftung schließt.

25. Wärmepumpenanlage nach einem der vorhergehenden Ansprüche, dadurch gekennzeichnet, daß an der äußeren Fensterbank (52) des Fensters (10) Verdampferrohre (2) vorgesehen sind.

26. Wärmepumpenanlage nach einem der vorhergehenden Ansprüche, gekennzeichnet durch eine vor dem der Umgebungsluft ausgesetzten Kältemittelkreislaufbereich (22) angeordnete Fassadenverkleidung (81) aus gut wärmeleitendem Material und ein im Zwischenraum zwischen der Fassadenverkleidung (81) und der Raumwand (85) angeordnetes, von einem Wärmetauschermedium durchströmtes Rohrsystem (80), welches an einen Verdichter oder dergleichen angeschlossen und sowohl an der Raumwand (85) als auch an der Fassadenverkleidung (81) als tragende Unterkonstruktion für die Fassadenverkleidung befestigt ist.

27. Wärmepumpenanlage nach Anspruch 26, dadurch gekennzeichnet, daß die Fassadenverkleidung (81) aus einer
Vielzahl von im Abstand von der Raumwand (85) bzw.
einer zwischen Raumwand und Fassadenverkleidung angeordneten wärmeisolierenden Schicht (89) angeordneten, vorzugsweise bandförmigen Fassadenelementen
(95) zusammengesetzt ist, wobei diese Fassadenelemente (95) jeweils unter Bildung eines innenliegenden, sich etwa parallel zur Raumwand erstreckenden
Flanschteils (90) eine im montierten Zustand nach
unten offene, etwa keilförmige Einbuchtung (96) aufweisen, in die die obere Kante (97) des darunter
angeordneten Fassadenelements eingeschoben ist, und
daß die Einzelrohre (92) des wärmeaufnehmenden Rohrsystems (80) an ihren innenliegenden Flanschteilen
(90) befestigbar sind.

28. Wärmepumpenanlage nach Anspruch 26, dadurch gekennzeichnet, daß die Einzelrohre (92) des wärmeaufnehmenden Rohrsystems (80) jeweils mit zwei sich etwa parallel
erstreckenden, an gegenüberliegenden Seiten der Rohre
etwa tangential angeordneten Flanschen (93,94) versehen sind, wobei der eine Flansch (93) zur Befestigung
des Rohres an der Innenseite der Fassadenverkleidung
und der andere Flansch (94) zur Befestigung an die Raumwand (85) oder Befestigungsleisten für das Rohrsystem
an der Raumwand dienen, und daß im Bereich der Befestigung der Flansche an der Fassadenverkleidung Luftkonvektionsöffnungen vorgesehen sind, so daß ein Durchgang für eine Luftströmung durch die zwischen den einzelnen von den Fassadenelementen (95) und Einzelrohren
(92) einerseits und der Raumwand (85) bzw. wärmeisolierenden Schicht (89) andererseits gebildeten Räume
(99) geschaffen ist.

29. Wärmepumpenanlage nach Anspruch 26, dadurch gekennzeichnet, daß die Fassadenverkleidung (81) aus einer
Vielzahl von im Abstand von der Raumwand (85) bzw.
wärmeisolierenden Schicht (89) angeordneten Fassadenelementen (95') zusammengesetzt ist, deren oberer
Rand mit vorzugsweise nach innen eingezogenen Klammern
(108) versehen ist, welche sich über die Länge der
Einzelrohre (92) erstrecken und mittels denen die Fassadenelemente (95') an den Einzelrohren (92) des
wärmeaufnehmenden Rohrsystems (80) festklemmbar sind,
wobei der untere Rand der Fassadenelemente (95') jeweils
haubenartig (119) ausgebildet und von oben her über die
Klammern (108) stülpbar ist.

30. Wärmepumpenanlage nach Anspruch 29, dadurch gekennzeichnet, daß bei Anordnung des wärmeaufnehmenden
Rohrsystems (80) auf einem Schrägdach der obere Rand
einer Dachrinne (109) ebenfalls mit vorzugsweise nach
innen eingezogenen Klammern (108) versehen ist, mittels
denen die Dachrinne (109) an dem, dem Dachrand benachbarten Einzelrohr einhängbar und festklemmbar ist.

31. Wärmepumpenanlage nach Anspruch 26, dadurch gekennzeichnet, daß die Fassadenverkleidung aus einer Vielzahl von im Abstand von der Raumwand (85) angeordneten, vorzugsweise bandförmigen Fassadenelementen
(118;121;122) zusammengesetzt ist, wobei an den
unteren Längsrandseiten der bandförmigen Fassadenelemente jeweils eine Ausnehmung (126; 127; 128) in der Größe eines darin aufzunehmenden Rohrs (92) für das Kältemittel vorgesehen ist, dessen freie Öffnung (116;114) kleiner ist als der äußere Durchmesser des das Kältemittel führenden Einzelrohrs (92) und welche einen Profil- oder Federungsabschnitt (113) aufweist, der das Eigengewicht des Fassadenelements und/oder des das Kältemittel führenden Rohrs gegen dieses Rohr abstützt, und wobei das Fassadenelement nur an seinem jeweils unteren Laschenrand (132) an der Gebäudewand (85) befestigt ist.

32. Wärmepumpenanlage nach Anspruch 31, dadurch gekennzeichnet, daß das Eigengewicht des Fassadenelements sich über den auf der der Gebäudewand (85) gegenüberliegenden Seite der Ausnehmung (126;127) angeordneten Profilabschnitt (113) abstützt, wobei die freie Öffnung (116) nach unten offen ist, und teilweise vom Profilabschnitt eingeengt ist.

33. Wärmepumpenanlage nach Anspruch 32, dadurch gekennzeichnet, daß die Ausnehmung (128) nach oben offen (Öffnung 114) ist und der Federungsabschnitt (112) die Ausnehmung (128) an der zur Gebäudewand (85) hin liegenden Seite umgreift.

34. Wärmepumpenanlage nach einem der vorhergehenden Ansprüche, gekennzeichnet durch ein die an einer Gebäudewand oder Dachfläche angeordneten Einzelrohre (92) umgreifendes und längsverlaufendes Befestigungsprofil (111), mit dem zugleich die Dach- oder Fassadenelemente am Gebäude befestigbar sind.

35. Wärmepumpenanlage insbesondere nach einem der vorhergehenden Ansprüche, dadurch gekennzeichnet, daß der Verdichter (8) eine Kolbenmaschine ist, bei der die Antriebs- und Verdichterleistung mittels Schubbewegung innerhalb eines gemeinsamen Gehäuses stattfindet, und daß Antriebs- (62) und Verdichterkolben (63) entweder einstückig integriert als Doppelfunktionskolben (72) oder jeweils getrennt im eigenen Zylinder als starr miteinander verbundene Doppelkolben ausgebildet sind, wobei die jeweils voneinander abgewandten Kolbenböden (73) einerseits dem Verdichtungsraum (65) und andererseits dem Antriebsraum (64) zugeordnet sind.

36. Verdichter einer Wärmepumpenanlage nach Anspruch 35, dadurch gekennzeichnet, daß alle Doppelkolben (72) mittels einer Querverbindung (68) zu synchroner Hubbewegung seitlich starr miteinander verbunden sind und daß die Antriebs- und Verdichtungsräume innerhalb des Gehäuses in Wechselwirkung jeweils zweier Kolbensätze einander entgegengesetzt angeordnet sind.

37. Wärmepumpenanlage nach einem der vorhergehenden Ansprüche 1 - 34, dadurch gekennzeichnet, daß die Einzelrohre (5 bzw. 92) des wärmeabgebenden Bereichs (25) unmittelbar auf der Außenseite der Gebäudewand (85) angebracht sind, wobei der Innenraum indirekt und unter Ausnutzung der Gebäudewand als Wärmespeicher beheizbar ist.

Fig.1

Fig.2

0045506

Fig.4

Fig.3

Fig.5

Fig.6

# Fig. 7

# Fig. 7a

Fig.8

Fig. 9

Fig.10

Fig.11

Fig.12b

Fig.12

Fig.12a

0045506

Fig. 13

Fig. 14

## Fig. 15

0045506

Fig.16

Fig.17

Fig.18

Fig.19

**0045506**

**Europäisches Patentamt**

**EUROPÄISCHER RECHERCHENBERICHT**

Nummer der Anmeldung

EP 81 10 6065

---

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 336 667 (BOGDANSKI) <br> * Seite 3, Zeile 1 - Seite 4, Zeile 8 * <br><br> -- | 1,2 |
| X | GB - A - 2 032 085 (WRIGHT) <br> * Seite 1, Zeile 33 - Seite 2, Zeile 22; Zeichnung * <br><br> -- | 1 |
| | FR - A - 2 412 790 (CESBRON) <br> * Seite 3, Zeile 4 - Seite 4, Zeile 27; Zeichnung * <br><br> -- | 1,6, 10,12 |
| | US - A - 2 462 557 (SANTEE) <br> * Spalte 3, Zeilen 27-73; Figur 3 * <br><br> -- | 1,2 |
| | DE - A - 2 605 117 (WEISS) <br> * Seite 6, Zeile 1 - Seite 7, Zeile 18; Figuren 1,2 * <br><br> -- | 1,2 |
| | EP - A - 0 002 839 (WEISS) <br> * Seite 9, Zeile 32 - Seite 12, Zeile 2; Figuren 1,2 * <br><br> -- | 1,2,4 |
| | FR - A - 2 414 694 (PARICA) <br> * Seite 2, Zeilen 19-39; Figuren 2,3 * <br><br> -- <br><br> ./. | 1,2,4 |

**KLASSIFIKATION DER ANMELDUNG (Int Cl ³)**

F 24 D 3/00

**RECHERCHIERTE SACHGEBIETE (Int. Cl.³)**

F 24 D
F 24 F
F 24 J
F 25 B

**KATEGORIE DER GENANNTEN DOKUMENTE**

X: von besonderer Bedeutung
A: technologischer Hintergrund
O: nichtschriftliche Offenbarung
P: Zwischenliteratur
T der Erfindung zugrunde liegende Theorien oder Grundsätze
E kollidierende Anmeldung
D: in der Anmeldung angeführtes Dokument
L aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-11-1981 | WEIS |

EPA form 1503.1    06.78

Europäisches
Patentamt

**EUROPÄISCHER RECHERCHENBERICHT**

| | **EINSCHLÄGIGE DOKUMENTE** | | **KLASSIFIKATION DER ANMELDUNG (Int.Cl. ³)** |
|---|---|---|---|
| Kategorie | Kennzeichnung des Dokuments mit Angabe, soweit erforderlich, der maßgeblichen Teile | betrifft Anspruch | |
| | <u>DE - A - 2 166 539</u> (PRINCIPIA) <br><br> * Seite 3, Zeile 4 - Seite 6, Zeile 3; Figuren 1a,1b,2 * <br><br> ---- | 4 | |
| | | | **RECHERCHIERTE SACHGEBIETE (Int. Cl. ³)** |